# EUROPEAN PATENT SPECIFICATION

(11) **EP 1 169 512 B1**
(45) Date of publication and mention of the grant of the patent: **10.11.2004**
(21) Application number: 00918896.2
(22) Date of filing: 11.04.2000
(51) Int. Cl.: D21F 5/18, B01D 46/04

(54) **APPARATUS FOR CLEANING THE DRYING AIR OF A PULP DRYER**
VORRICHTUNG ZUR REINIGUNG DER TROCKENLUFT EINES PULPTROCKNERS
APPAREIL D'EPURATION DE L'AIR DE SECHAGE D'UN SECHOIR DE PATE A PAPIER

(30) Priority: 13.04.1999 FI 990804
(43) Date of publication of application: 09.01.2002
(73) Proprietor: Metso Paper, Inc., 00130 Helsinki (FI)
(72) Inventor: HUHTALA, Olli, FIN-20660 Littoinen (FI)
(74) Representative: Leson, Thomas Johannes Alois, Dipl.-Ing.
(86) International application number: PCT/FI2000/000300
(87) International publication number: WO 2000/061863

(56) References cited:
- EP-A1- 0 556 417
- DE-A1- 3 234 436
- US-A- 4 435 909

## Description

The present invention relates to a device defined in the introductory part of the independent claim presented below for cleaning the drying air in a cellulose dryer.

A typical cellulose dryer comprises
- an actual drying section where a cellulose web is dried in airborne web drying by hot air jets or the like,
- at least one, generally a large number of recirculated air blowers arranged next to the actual drying section, with which blowers humid air is removed from the actual drying section and with which heated air is blown as drying air into the actual drying section, and
- heating devices, with which the removed humid air is heated before it is returned as drying air into the actual drying section.

A plurality of blowers operating in parallel are mounted on top of each other in order to form so called blower towers, a required number of which then is arranged next to each other. The blowers are installed in the blower tower so that their suction openings are bordered by the front and back sides of the blower tower, as seen in the travel direction of the web being dried. Heating devices are arranged in the front and back sides of the blower towers in front of the suction openings of the blowers, so that the heating devices heat the humid air discharged from the drying section before it reaches the blowers.

On the other hand, in front of the heating devices, i.e. on their inlet side, there is arranged a filter net or the like to prevent paper lint, fibres and other dust from reaching the heating device and the blower. The dust sticks to the filter net, which then must be cleaned from time to time.

In the heating devices of a cellulose dryer, such as in steam radiators, the cleaning of the filter nets is presently made manually with a vacuum cleaner. The cleaning is made e.g. once or twice a week. Then the person using the vacuum cleaner must go at least partly within the space between the blower towers where the temperature and the moisture are high. The work is very unpleasant and difficult to perform with the required carefulness, and thus it is not always made sufficiently often. An inadequate vacuuming causes the pressure difference to increase and a reduced air volume of the recirculated air blowers. In the drying section this results in a lower effect of the airborne drying and problems regarding the runability. Of course the production will also decrease. Therefore one should get rid of this operation.

The object of the present invention is to provide a device for cleaning the drying air of a cellulose dryer where the above mentioned problems have been minimised.

The object is then to provide a device where the filter net can be automatically cleaned.

In order to attain the above presented objects the device according to the invention is characterised in what is presented in the characterising clause of the independent claim presented below.

A typical device according to the invention for cleaning the drying air comprises
- a cleaning device for cleaning a filter net or the like, and
- transport means with which the filter net or the like can be moved in parallel with the inlet side plane of the heating device, and moved at least partly from the position in front of the inlet side of the heating device to the location of the cleaning device, which are fixedly combined with the device.

The cleaning device can be fastened for instance in the frame structures of the blower tower, in the frame structures of the cleaning net, or in other corresponding structures present in a cellulose dryer. The cleaning device is typically a device with the width of the whole cleaning net, the device cleaning an area with the entire width of the net at a time. Of course the device can be narrower, whereby it must be possible to move the device in the width direction of the cleaning net. Then the device cleans only a portion of the width of the net at a time.

Advantageously the cleaning device comprises means arranged on the clean side of the filter net or the like for blowing cleaning gas, such as compressed air, through the filter net or the like. The cleaning gas is blown through the net from its clean side. Preferably the cleaning device further has means, such as a negative pressure box, in order to remove the cleaning gas and dust or the like which has flown through the filter net or the like. Alternatively or in addition, the cleaning device can comprise mechanical means arranged on the dirty side of the cleaning net, such as two or more successive brass brushes which loosen dust from the surface of the filter net. The loosened dust or the like can be collected in a suitable box, such as in a negative pressure box, from which the dust can be discharged through conventional piping to a dust collecting bin or the like. The dust removal can be made through e.g. already existing dust removal piping used in the vacuum cleaning.

In a typical device according to the invention the filter net is fastened to guiding means, such as rails, arranged in front of the heating device, and along which rails the filter net or the like can be moved forward, generally upward or downward in front of the heating device.

In a typical solution according to the invention the filter net forms an endless loop which is arranged to travel, supported by rolls, past the heating device so that
- one section of the loop travels in front of the inlet side of the first heating device, whereby it cleans the air coming to this heating device, and so that
- outside the said first section the loop travels past or through a cleaning device, where the filter net or the like is cleaned.

Typically the cleaning net loop travels around the blower tower or a part of it, so that the loop travels past the heating devices on both sides of the tower, whereby it cleans the air flowing into these heating devices. Typically the loop travels past a cleaning device for the cleaning net, the cleaning device being arranged between the sections travelling past the heating devices.

The cleaning net loop can be directed to travel around the blower tower, guided by four relatively small rolls. Then one or more of the rolls can be a driving roll, which is connected to a small driving unit, such as a combination of an electric motor and a gearbox. The cleaning of the cleaning net loop can be arranged at the straight section of the loop or at a roll guiding the loop.

In cellulose dryers for instance one cleaning net loop according to the invention can be installed at each blower tower. Then the cleaning of the nets can be typically arranged to be done in one tower at a time. In each tower there can be arranged a control damper and an on/off-actuator, with the aid of which the cleaning can be started.

During each cleaning stage the cleaning net loop can travel one or more complete turns and return to the same point, or travel only a certain distance forward, whereby only a part of the loop is cleaned.

This cleaning device according to the invention provides that important advantage that the cleaning of the cleaning net can be arranged to be made automatically. The cleaning can be made in a closed space where the moisture and temperature are high.

The invention is described in more detail below with reference to the enclosed drawings, in which
Figure 1 shows schematically, as seen from one side, a typical cellulose dryer where a device according to the invention can be mounted for cleaning the drying air;
Figure 2 shows schematically, as seen obliquely from above, a part of a cellulose dryer where a conventional cleaning net is combined with the blower;
Figure 3 shows schematically, as seen from one side, an exemplary blower tower of a cellulose dryer where a device according to the invention is arranged for cleaning the drying air;
Figure 4 shows a part of the blower tower of Figure 3, as seen obliquely from one side, and
Figure 5 shows an enlargement of the net cleaning device according to the Figure 3.

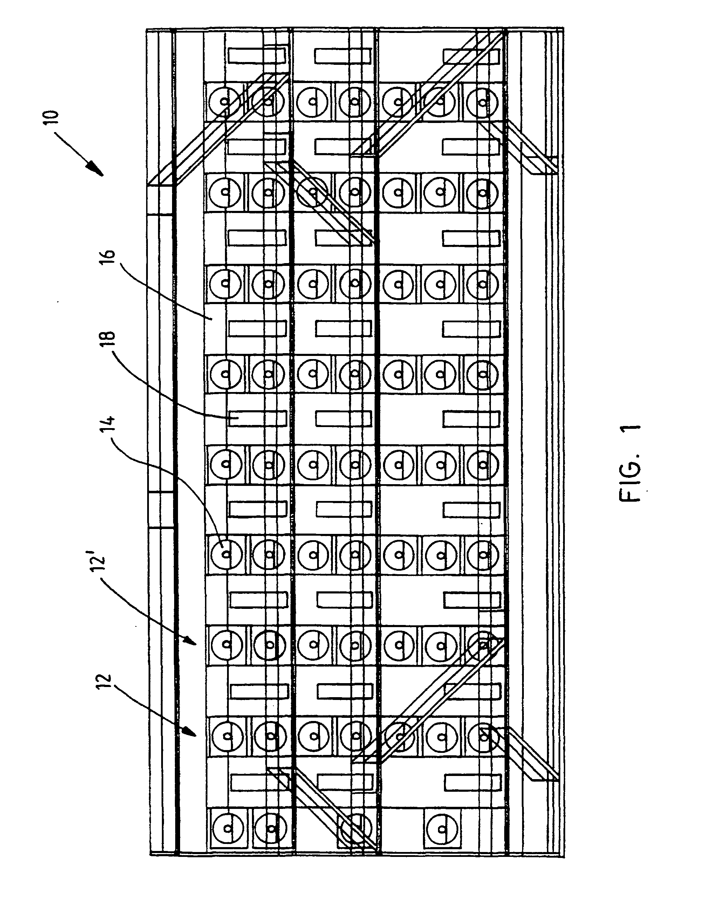

Figure 1 shows a conventional cellulose dryer 10 which comprises a plurality of adjacent blower towers 12, 12' having 7 blowers 14 on top of each other. The sides of the cellulose dryer are closed by end walls 16 arranged between the blower towers. The end walls have doors 18, through which it is possible to reach i.a. the cleaning nets arranged in front of the blowers/heating devices in order to clean them. A cellulose dryer provided with a device according to the invention would look generally the same when seen from one side.

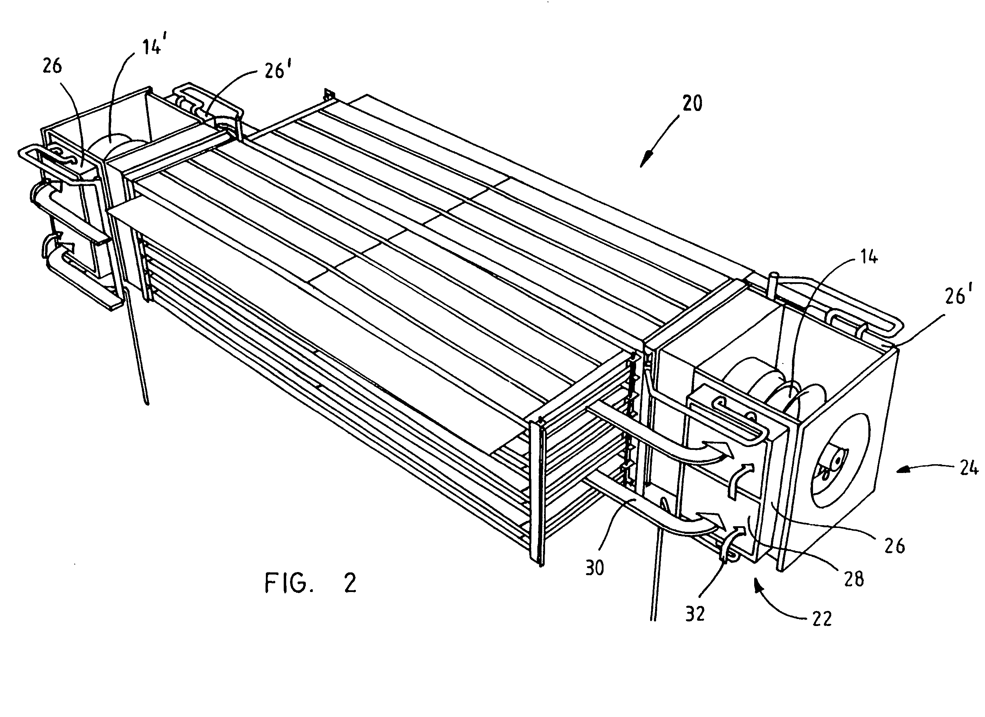

Figure 2 shows a part of a conventional cellulose dryer. The actual airborne drying section 20 in the cellulose dryer has on both sides blowers 14, 14'. Vertical steam radiators 26, 26' are arranged in front of the suction openings of the blowers, as seen in the machine direction on the front side 22 and back side 24, respectively. The vertical sides of the steam radiators 26, 26' are covered by a fixed cleaning net 28.

Humid air flows in a manner shown by the arrow 30 from the actual drying section through the cleaning net 28 and the steam radiator 26 into the blower 14. A small amount of compensating air is also sucked into the blower according to the arrows 32. The blower blows the heated air back into the actual drying section.

The cleaning net shown in Figure 2 must be cleaned from time to time, by vacuuming away the dust sticking to the surface of the net 28. In the Figure one can see that one must then stand in the humid and hot air flow 30.

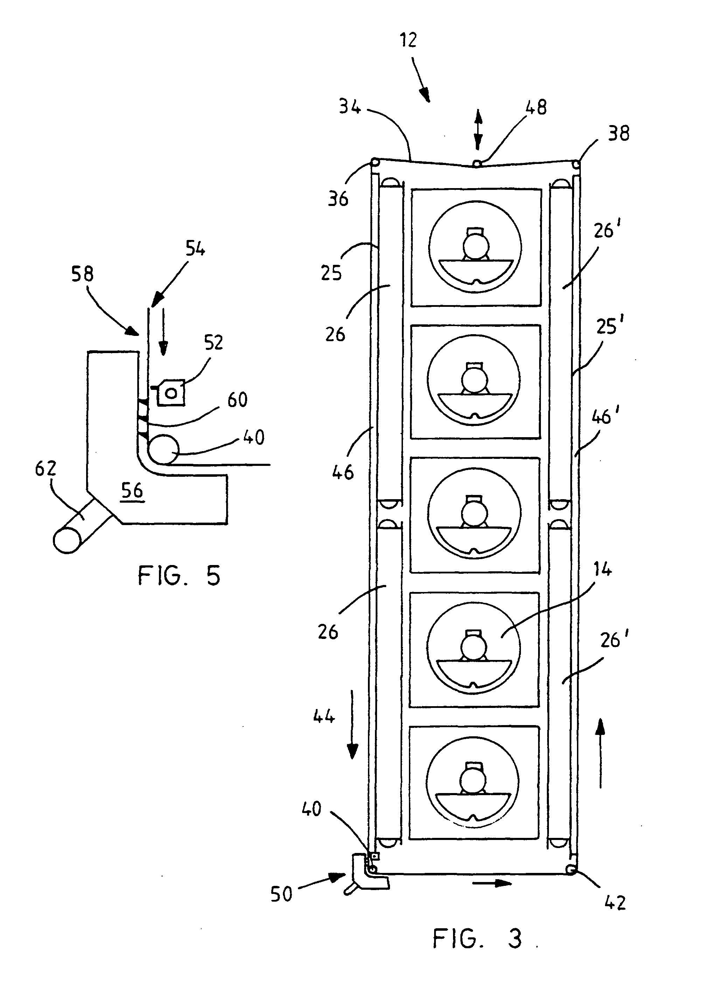

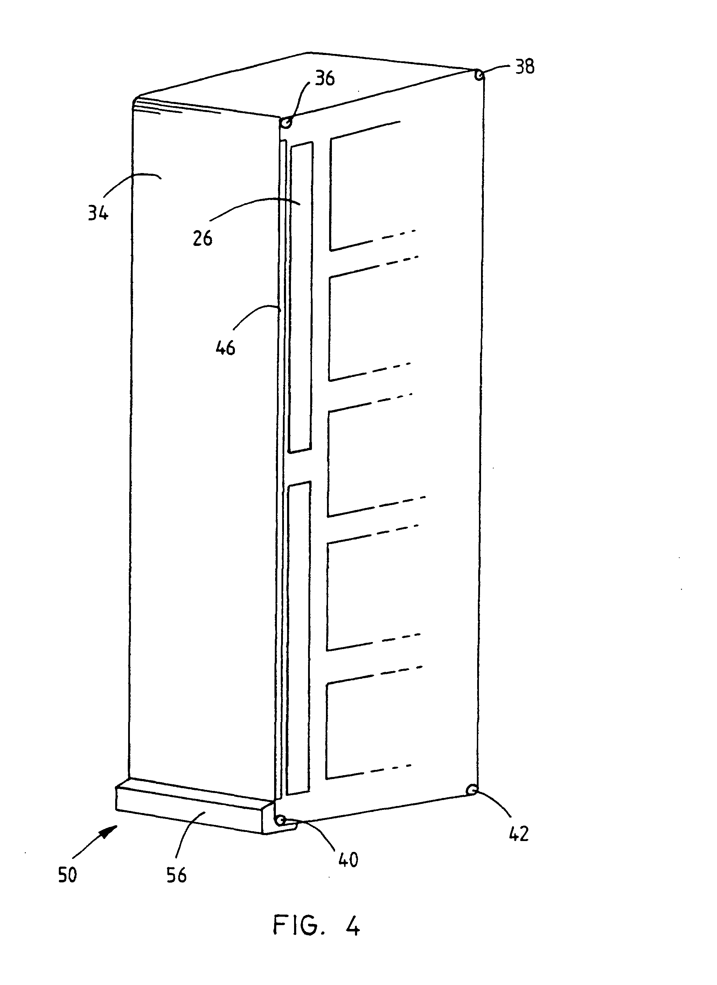

Figure 3 shows a blower tower 12 where a device according to the invention is applied for cleaning the drying air. The same blower tower is partly shown in Figure 4. The blower tower shown in the Figures has five blowers 14 on top of each other and two steam radiators 26, 26' on top of each other on both sides of the blowers in front of the suction openings. A cellulose dryer has typically a plurality of blower towers according to Figure 3 arranged side by side. There may be two or even more blower towers 12 according to Figure 3 also on top of each other. However, typically one cleaning net loop is arranged to travel around all blowers placed on top of each other.

The cleaning net loop 34 is arranged to travel in front of the heating device 26, 26' of the blower tower, vertically and parallel to the plane of the inlet side 25, 25' of the heating device, i.e. so that the cleaning net mainly covers the openings on the inlet side of the heating device. The net loop 34 is guided by four rolls 36, 38, 40, 42, which are arranged at the comers of the blower tower. Two conventional rolls 36, 38 are arranged mainly above the heating devices, and two rolls 40, 42 are arranged below the heating devices. The roll 42 is provided with a drive, which is not shown, in order to rotate the net loop forward in the manner shown by the arrow 44.

In front of the heating devices 26, 26', i.e. on that side which is away from the blower, there are arranged rails 46, 46' along which the cleaning net 34 is arranged to travel past the heating devices. A roll 48 is arranged in the upper part of the blower tower, outside the cleaning net loop, and with the aid of this roll it is possible to adjust the tension in the loop.

At one of the bottom comers of the cleaning net loop in the blower tower of Figure 3 there is arranged cleaning devices 50, which, as better illustrated in Figure 5, comprise blowing means 52 for blowing cleaning air against the clean side 54 of the net, a suction box 56 for collecting dust, garbage and so on which is loosened from the dirty side 58 of the net. Additionally mechanical cleaning brushes 60 are connected to the suction box. The suction box 56 is connected via a channel 62 to a dust collection bin, which is not shown. When the cleaning net passes in the direction shown by the arrow the blowing means 52 blow off dust from the net. The loosened dust is sucked into the suction box 56. The brushes 60 remove dirt which was stronger attached.

The solution according to the invention is simple and it can be applied in different blower/heating device solutions. The cleaning net can be arranged to pass for instance only around one blower. On the other hand, the cleaning net can be arranged to travel past two adjacent blower towers, i.e. past the heating device farthest back in the first blower tower and past the heating device farthest in front of the second blower tower. When desired, the invention can also be applied in such solutions where the cleaning net is moved in front of the heating device, so that the net does not form a loop. Then the net can be moved alternately upwards and downwards for cleaning, and it can for instance be rolled, and so that during the cleaning phase the part of the net being cleaned can be moved away from its position in front of the heating device.

The cleaning device can be arranged in a place where the net turns, as shown in Figure 3, or at a straight run of the net. A narrow cleaning device, narrower than the width of the net, can be arranged in connection with the blower tower, so that it can be moved in the transversal direction during the cleaning phase.

The invention is not intended to be limited to the above presented embodiment, but it is intended to be widely applicable within the scope of the invention defined by the claims presented below.

## Claims

1. A device for cleaning the drying air of a cellulose dryer (10), in a cellulose dryer which comprises
an actual drying section (20) where a cellulose web is dried with hot air jets or the like,
a blower tower (12) arranged next to the actual drying section, the blower tower comprising one or more blowers (14) mounted one on top of the other, for removing humid air from the actual drying section and blowing heated air as drying air into the actual drying section, and
a heating device (26, 26'), such as a steam radiator, arranged on the suction side of said at least one blower in the blower tower, for reheating the humid air removed from the actual drying section,
the device comprising
a filter net (28, 34) or the like arranged in front of the heating device on its inlet side, for filtering the air being heated before the heating,
a cleaning device (50) for cleaning the filter net (28, 34) or the like, and
transport means (36, 38, 40, 42; 46) with which the filter net or the like can be moved to the location of the cleaning device,
**characterised in that** the filter net forms a loop (34) which is arranged to travel around the blower tower.

2. A device according to claim 1, **characterised in that** guiding means (46), such as rails, are arranged in front of the heating device, along which guiding means the filter net or the like can be moved forwards in front of the heating device.

3. A device according to claim 1, **characterised in that** the filter net or the like forms a closed loop (34) which is arranged around the heating device, so that
- one section of the loop passes in front of the inlet side of the first heating device (26) and cleans the air coming to this heating device, and that
- the loop outside said first section travels past a cleaning device (50) where the filter net or the like is cleaned.

4. A device according to claim 3, **characterised in that**
- the loop outside said first section passes in front of a second heating device (26') and cleans the air coming to this heating device, and that
- the loop between said first and second sections travels past a cleaning device where the filter net or the like is cleaned.

5. A device according to claim 1 in a cellulose dryer having at least one blower tower (12, 12') which comprises
one or more blowers (14) which are mounted on top of each other and arranged to suck humid air from the actual drying section and to blow hot drying air into the actual drying section,
at least one first heating device (26) which is arranged on the front side of the blower, as seen in the travelling direction of the machine, in order to heat the humid air before the blower, and
at least one second heating device (26') which is arranged on the back side of the blower, as seen in the travelling direction of the machine, in order to heat the humid air before the blower,
**characterised in that** the filter net forms a loop (34) which is arranged to travel
downwards or upwards on the inlet side of the first heating device (26) and in the opposite direction, i.e. upwards or downwards, on the inlet side of the second heating device (26').

6. A device according to claim 5, **characterised in that** rolls (36, 38, 40, 42) or the like, guiding the travel of the filter net loop, are arranged mainly above and below the heating device.

7. A device according to claim 6, **characterised in that** one or more of the rolls (42) guiding the travel of the filter net loop are provided with a drive.

8. A device according to claim 5, **characterised in that** the cleaning device (50) is mounted in connection with the filter net loop at a position where the loop does not filter the air flowing into the heating device.

9. A device according to claim 1, **characterised in that** the cleaning device has mainly a width equal to that of the cleaning net to be cleaned, and that the device is fastened to a support structure holding the blowers, the heating device, the cleaning net or the like.

10. A device according to claim 1, **characterised in that** the cleaning device comprises
- means (52) for blowing cleaning gas, such as compressed air, through the filter net or the like, and
- means (56), such as a negative pressure box, for removing the cleaning gas which passed through the filter net or the like and loosened dust or the like, the means being arranged on the clean side of the filter net or the like.

11. A device according to claim 1, **characterised in that** the cleaning device comprises
- mechanical means (60) for removing dust or other dirt from the surface of the filter net, and
- means for collecting the removed dust or the like, for instance into a negative pressure box,
the means being arranged on the dirty side of the filter net or the like.

12. A device according to claim 3, **characterised in that** the cleaning device is arranged at a curved section of the net in the cleaning net loop.

## Patentansprüche

1. Vorrichtung zur Reinigung der Trocknungsluft eines Zellulosetrockners (10) bei einem Zellulosetrockner, der folgendes aufweist:
- eine eigentliche Trockenpartie (20), bei der eine Zellulosebahn mit Heißluftstrahlen oder dergleichen getrocknet wird,
- einen Gebläseturm (12), der benachbart zu der eigentlichen Trockenpartie angeordnet ist, wobei der Gebläseturm ein oder mehrere Gebläse (14) aufweist, die übereinander montiert sind, zum Entfernen von feuchter Luft aus der eigentlichen Trockenpartie und zum Blasen von erwärmter Luft als Trocknungsluft in die eigentliche Trockenpartie, und
- eine Erwärmungsvorrichtung (26, 26') wie beispielsweise ein Dampfradiator, die an der Saugseite von dem zumindest einen Gebläse in dem Gebläseturm angeordnet ist, um die aus der eigentlichen Trockenpartie entfernte feuchte Luft erneut zu erwärmen,
wobei die Vorrichtung Folgendes aufweist:
- ein Filternetz (28, 34) oder dergleichen, das vor der Erwärmungsvorrichtung an ihrer Auslassseite angeordnet ist, um die Luft, die erwärmt wird, vor dem Erwärmen zu filtern,
- eine Reinigungsvorrichtung (50) zum Reinigen des Filternetzes (28, 34) oder dergleichen und
- eine Transporteinrichtung (36, 38, 40, 42; 46), mit der das Filternetz oder dergleichen zu dem Ort der Reinigungsvorrichtung bewegt werden kann,
**dadurch gekennzeichnet, dass**
das Filternetz eine Schleife (34) ausbildet, die so eingerichtet ist, dass sie um den Gebläseturm herum läuft.

2. Vorrichtung gemäß Anspruch 1,
**dadurch gekennzeichnet, dass**
Führungseinrichtungen (46), wie beispielsweise Schienen, vor der Erwärmungsvorrichtung angeordnet sind,
wobei entlang der Führungseinrichtungen das Filternetz oder dergleichen nach vorn vor die Erwärmungsvorrichtung bewegt werden kann.

3. Vorrichtung gemäß Anspruch 1,
**dadurch gekennzeichnet, dass**
das Filternetz oder dergleichen eine geschlossene Schleife (34) ausbildet, die um die Erwärmungsvorrichtung herum so angeordnet ist, dass
- ein Abschnitt der Schleife vor der Einlassseite der ersten Erwärmungsvorrichtung (26) passiert und die zu dieser Erwärmungsvorrichtung kommende Luft reinigt, und
- die Schleife an der Außenseite von dem ersten Abschnitt hinter eine Reinigungsvorrichtung (50) läuft, bei der das Filternetz oder dergleichen gereinigt wird.

4. Vorrichtung gemäß Anspruch 3,
**dadurch gekennzeichnet, dass**
- die Schleife an der Außenseite des ersten Abschnitts vor einer zweiten Erwärmungsvorrichtung (26') passiert, und die zu dieser Reinigungsvorrichtung gelangende Luft reinigt, und
- die Schleife zwischen dem ersten und dem zweiten Abschnitt hinter eine Reinigungsvorrichtung läuft, bei der das Filternetz oder dergleichen gereinigt wird.

5. Vorrichtung gemäß Anspruch 1 bei einem Zellulosetrockner mit zumindest einem Gebläseturm (12, 12'), der Folgendes aufweist:
- ein oder mehrere Gebläse (14), die übereinander montiert sind und so eingerichtet sind, dass sie feuchte Luft aus der eigentlichen Trockenpartie saugen und heiße Trocknungsluft in die eigentliche Trockenpartie blasen,
- zumindest eine erste Erwärmungsvorrichtung (26), die an der Vorderseite des Gebläses unter Betrachtung in der Laufrichtung der Maschine angeordnet ist, um die feuchte Luft vor dem Gebläse zu erwärmen, und
- zumindest eine zweite Erwärmungsvorrichtung (26'), die an der Rückseite des Gebläses unter Betrachtung der Laufrichtung der Maschine angeordnet ist, um die feuchte Luft vor dem Gebläse zu erwärmen,
**dadurch gekennzeichnet, dass**
das Filternetz eine Schleife (34) ausbildet, die so eingerichtet ist, dass sie folgendermaßen läuft:
- nach unten oder nach oben an der Einlassseite der ersten Erwärmungsvorrichtung (26) und in der entgegengesetzten Richtung, das heißt nach oben oder nach unten, an der Einlassseite der zweiten Erwärmungsvorrichtung (26').

6. Vorrichtung gemäß Anspruch 5,
**dadurch gekennzeichnet, dass**
Walzen (36, 38, 40, 42) oder dergleichen, die den Lauf der Filternetzschleife führen, hauptsächlich oberhalb und unterhalb der Reinigungsvorrichtung angeordnet sind.

7. Vorrichtung gemäß Anspruch 6,
**dadurch gekennzeichnet, dass**
eine oder mehrere der Walzen (42), die den Lauf der Filternetzschleife führen, mit einem Antrieb versehen sind.

8. Vorrichtung gemäß Anspruch 5,
**dadurch gekennzeichnet, dass**
die Reinigungsvorrichtung (50) in Verbindung mit der Filternetzschleife an einer Position montiert ist, an der die Schleife nicht die Luft filtert, die in die Erwärmungsvorrichtung hineinströmt.

9. Vorrichtung gemäß Anspruch 1,
d**adurch gekennzeichnet, dass**
die Reinigungsvorrichtung hauptsächlich eine Breite hat, die gleich derjenigen des Reinigungsnetzes, das zu reinigen ist, ist, und
die Vorrichtung an einem Stützaufbau befestigt ist, der die Gebläse, die Erwärmungsvorrichtung, das Reinigungsnetz oder dergleichen hält.

10. Vorrichtung gemäß Anspruch 1,
**dadurch gekennzeichnet, dass**
die Reinigungsvorrichtung Folgendes aufweist:
- eine Einrichtung (52) für ein Blasen von Reinigungsgas wie beispielsweise Druckluft durch das Filternetz oder dergleichen und
- eine Einrichtung (56) wie beispielsweise ein Unterdruckkasten zum Entfernen des Reinigungsgases, das durch das Filternetz oder dergleichen getreten ist und Staub oder dergleichen gelöst hat,
wobei die Einrichtung an der Sauberseite des Filternetzes oder dergleichen angeordnet ist.

11. Vorrichtung gemäß Anspruch 1,
**dadurch gekennzeichnet, dass**
die Reinigungsvorrichtung Folgendes aufweist:
- eine mechanische Einrichtung (60) zum Entfernen von Staub oder anderer Verschmutzung von der Oberfläche des Filternetzes und
- eine Einrichtung zum Sammeln des entfernten Staubes oder dergleichen, beispielsweise in einen Unterdruckkasten,
wobei die Einrichtung an der Schmutzseite des Filternetzes oder dergleichen angeordnet ist.

12. Vorrichtung gemäß Anspruch 3,
**dadurch gekennzeichnet, dass**
die Reinigungsvorrichtung an einem gekrümmten Abschnitt des Netzes in der Reinigungsnetzschleife angeordnet ist.

## Revendications

1. Dispositif pour épurer l'air de séchage d'un séchoir à cellulose (10) dans un séchoir à cellulose qui comporte :
- une partie de séchage (20) à proprement parler dans laquelle un tissu de cellulose est séché au moyen de jets d'air chaud ou de leur équivalent ;
- une tour de souffleries (12) disposée à côté de la section de séchage à proprement parler, la tour de souffleries comprenant une ou plusieurs souffleries (14) montées les unes sur les autres, pour chasser l'air humide de la section de séchage à proprement parler et souffler de l'air chauffé servant d'air de séchage dans la section de séchage à proprement parler ; et
- un dispositif de chauffage (26, 26'), tel qu'un radiateur à vapeur, disposé sur le côté d'aspiration de ladite au moins une soufflerie de la tour de souffleries, pour réchauffer l'air humide chassé de la section de séchage à proprement parler ;
le dispositif comprenant
- une grille de filtrage (28, 34) ou son équivalent disposés à l'avant du dispositif de chauffage, sur son côté d'aspiration, pour filtrer l'air chauffé avant son chauffage ;
- un dispositif de nettoyage (50) pour nettoyer la grille de filtrage (28, 34) ou son équivalent ; et
- des moyens de transport (36, 38, 40, 42 ; 46) avec lesquels la grille de filtrage ou son équivalent peuvent être déplacés à l'emplacement du dispositif de nettoyage ;
**caractérisé en ce que** la grille de filtrage forme une bande (34) disposée pour se déplacer autour de la tour de souffleries.

2. Dispositif selon la revendication 1, **caractérisé en ce que** les moyens de guidage (46), tels que des rails, sont disposés devant le dispositif de chauffage, le long desquels la grille de filtrage ou son équivalent peuvent être déplacés vers l'avant devant le dispositif de chauffage.

3. Dispositif selon la revendication 1, **caractérisé en ce que** la grille de filtrage ou son équivalent forment une bande (34) fermée disposée autour du dispositif de chauffage, de sorte
- qu'une section de la bande passe devant le côté d'aspiration du premier dispositif de chauffage (26) et nettoie l'air se dirigeant vers ce dispositif de chauffage ; et **en ce que**
- la bande en dehors de ladite première section passe devant un dispositif de nettoyage (50) dans lequel la grille de filtrage ou son équivalent sont nettoyés.

4. Dispositif selon la revendication 3, **caractérisé en ce que**
- la bande en dehors de ladite première section passe devant un deuxième dispositif de chauffage (26') et épure l'air se dirigeant vers ce dispositif de chauffage ; et **en ce que**
- la bande entre lesdites première et deuxième sections passe devant un dispositif de nettoyage dans lequel la grille de filtrage ou son équivalent sont nettoyés.

5. Dispositif selon la revendication 1 dans un séchoir à cellulose ayant au moins une tour de souffleries (12, 12') comprenant
- une ou plusieurs souffleries (14) montées les unes sur les autres et agencées pour aspirer l'air humide provenant de la section de séchage à proprement parler et pour souffler l'air de séchage chaud dans la section de séchage à proprement parler ;
- au moins un premier dispositif de chauffage (26) disposé sur la face avant de la soufflerie, telle que montrée dans le sens de marche de la machine, afin de chauffer l'air humide avant qu'il n'atteigne la soufflerie ; et
- au moins un deuxième dispositif de chauffage (26') disposé sur la face arrière de la soufflerie, telle que montrée dans le sens de marche de la machine, afin de chauffer l'air humide avant qu'il n'atteigne la soufflerie ;
**caractérisé en ce que** la grille de filtrage forme une bande (34) disposée de manière à se déplacer vers le haut ou vers le bas sur le côté entrée du premier dispositif de chauffage (26) et dans la direction opposée, c'est-à-dire vers le bas ou vers le haut, sur le côté entrée du deuxième dispositif de chauffage (26').

6. Dispositif selon la revendication 5, **caractérisé en ce que** les rouleaux (36, 38, 40, 42) ou leur équivalent, guidant la course de la bande de grille de filtrage, sont disposés pour l'essentiel au-dessus et en dessous du dispositif de chauffage.

7. Dispositif selon la revendication 6, **caractérisé en ce que** un ou plusieurs des rouleaux (42) guidant la course de la bande de grille de filtrage sont pourvus d'un entraînement.

8. Dispositif selon la revendication 5, **caractérisé en ce que** le dispositif de nettoyage (50) est monté conjointement avec la bande de grille de filtrage dans une position dans laquelle la bande ne filtre pas l'air entrant dans le dispositif de chauffage.

9. Dispositif selon la revendication 1, **caractérisé en ce que** le dispositif de nettoyage a pour l'essentiel une largeur égale à celle de la grille de nettoyage à nettoyer et **en ce que** le dispositif est fixé à une structure de soutien maintenant les souffleries, le dispositif de chauffage, la grille de nettoyage ou leur équivalent.

10. Dispositif selon la revendication 1, **caractérisé en ce que** le dispositif de nettoyage comprend
- des moyens (52) pour souffler du gaz de nettoyage, tel que de l'air comprimé, à travers la grille de filtrage ou son équivalent ; et
- des moyens (56), tels qu'un caisson de dépression, pour chasser le gaz de nettoyage ayant traversé la grille de filtrage ou son équivalent et détaché de la poussière ou son équivalent,
- les moyens étant disposés sur la face propre de la grille de filtrage ou de son équivalent.

11. Dispositif selon la revendication 1, **caractérisé en ce que** le dispositif de nettoyage comprend
- des moyens mécaniques (60) pour détacher la poussière ou autres saletés de la surface de la grille de filtrage ; et
- des moyens pour recueillir la poussière détachée ou son équivalent, par exemple dans un caisson de dépression,
- les moyens étant disposés du côté sale de la grille de filtrage ou de son équivalent.

12. Dispositif selon la revendication 3, **caractérisé en ce que** le dispositif de nettoyage est disposé au niveau d'une section incurvée de la grille, dans la bande de grille de nettoyage.
